# EUROPEAN PATENT APPLICATION

(11) **EP 4 631 643 A1**
(43) Date of publication of application: **15.10.2025**
(21) Application number: 25166546.9
(22) Date of filing: 27.03.2025
(51) Int. Cl.: B21D 51/34, B21D 39/04, H01M 10/04, H01M 50/179, H01M 50/167, H01M 50/152, H01M 50/107, H01M 50/188, H01M 50/19, H01M 50/342

(54) **SECONDARY BATTERY**

(30) Priority: 03.04.2024 KR 20240045194
(71) Applicant: SAMSUNG SDI CO., LTD., Yongin-si, Gyeonggi-do 17084 (KR)
(72) Inventor: KWON, Jun Hwan, 17084 Yongin-si (KR); CHOI, Woo Hyuk, 17084 Yongin-si (KR); YANG, Jun Ho, 17084 Yongin-si (KR); PARK, Hyun Suk, 17084 Yongin-si (KR); LEE, Tae Yoon, 17084 Yongin-si (KR)
(74) Representative: Marks & Clerk LLP

(57) **Abstract**

A secondary battery includes an electrode assembly (120), including first and second electrode plates and a separator, a case (110) accommodating the electrode assembly (120) and electrically connected to the second electrode plate, a terminal (150) mounted to the case (110) configured to be electrically connected to the first electrode plate, a cap plate (160) sealing an open top of the case (110), and a second gasket (180) interposed between the case (110) and the cap plate (160). The case (110) includes a beading portion (113) depressed inward and a crimping portion (114) bent inward. A forming curvature calculated based on a bending amount (r1) of the crimping portion (114) and a covering length (L1) of the crimping portion (114) is different from a support strain calculated based on a depression depth (L3) of the beading portion (113) and a cover overlapping length (L2) of the crimping portion (114).

## Description

### FIELD

The present disclosure relates to a secondary battery.

### BACKGROUND

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The above information disclosed in this Background section is for enhancement of understanding of the background of the present disclosure, and therefore, it may contain information that does not constitute related (or prior) art.

### SUMMARY

The present disclosure provides a secondary battery capable of improving sealing performance of a cell housing part including a case and a cap plate.

These and other aspects and features of the present disclosure will be described in or will be apparent from the following description of embodiments of the present disclosure.

A secondary battery according to an embodiment of the present disclosure includes an electrode assembly, including a first electrode plate, a separator, and a second electrode plate, a case having a cylindrical shape and configured to accommodate the electrode assembly and electrically connected to the second electrode plate, the case including an open upper end portion, a terminal mounted through a lower surface of the case and configured to be electrically connected to the first electrode plate and coupled to the case via a first gasket, a cap plate configured to seal the upper end portion of the case, and a second gasket interposed between the case and the cap plate to perform sealing and insulation between the case and the cap plate, wherein the case includes a beading portion depressed toward an interior of the case at a position below the cap plate and a crimping portion located above the beading portion and bent toward the interior of the case to fix the cap plate, and a forming curvature calculated based on a bending amount of the crimping portion and a covering length of the crimping portion is different from a support strain calculated based on a depression depth of the beading portion and a cover overlapping length of the crimping portion.

In some examples, the forming curvature may be greater than the support strain.

In some examples, the crimping portion may include a first area located at an end of the case to cover an upper surface of an edge area of the cap plate, a second area extending downward from the first area and located on a side surface of the cap plate, and a third area extending downward from the second area and located on a lower surface of the edge area of the cap plate. The first area, the second area, and the third area may be formed so as to surround the upper surface, the side surface, and the lower surface of the cap plate, respectively. The first area and the second area may be connected to each other via a first bent area formed therebetween, and the second area and the third area may be connected to each other via a second bent area formed therebetween.

In some examples, the forming curvature may be a percentage of the ratio of the covering length of the crimping portion to the bending amount of the crimping portion. The bending amount of the crimping portion may be an arc length of the first bent area interconnecting the first area and the second area, and the covering length of the crimping portion may be a length from an end of the first area to an outer surface of the case.

In some examples, the forming curvature may be 265% to 300% of the ratio of the covering length of the crimping portion to the bending amount of the crimping portion.

In some examples, the support strain may be a percentage of the ratio of the cover overlapping length of the crimping portion to the depression depth of the beading portion. The depression depth of the beading portion may be a length between an outer surface of the second area and an outer surface of a depressed area of the beading portion, and the cover overlapping length of the crimping portion may be a length of a portion of the cap plate overlapped by the crimping portion or a length between an end of the crimping portion and an end of the cap plate.

In some examples, the support strain may be 66% to 75% of the ratio of the cover overlapping length of the crimping portion to the depression depth of the beading portion.

In some examples, the second gasket may be interposed between the cap plate and the crimping portion and between the cap plate and the beading portion to surround an upper surface, a side surface, and a lower surface of the edge area of the cap plate, and the cap plate may have no electrical polarity.

In some examples, the second gasket may include a sidewall portion located in contact with a side surface of the case and a bottom portion extending inward from a bottom surface of the sidewall portion and including at least one opening formed therein. The sidewall portion of the second gasket may include an upper end area, and the upper end area may be interposed between an outer surface of an end of the cap plate and an inner surface of the crimping portion.

In some examples, the upper end area of the second gasket may protrude farther toward the center of the cap plate than the crimping portion.

In some examples, the cap plate may include an edge area interposed between the crimping portion and the beading portion and a central area protruding in the outward direction of the case with respect to the edge area.

In some examples, the electrode assembly may further include a positive electrode uncoated portion not coated with a positive electrode active material and protruding downward from the first electrode plate and a negative electrode uncoated portion not coated with a negative electrode active material and protruding upward from the second electrode plate.

In some examples, the secondary battery may further include a current collector formed in a disc shape corresponding to an upper surface of the electrode assembly. The current collector may be in contact with and electrically connected to the second electrode plate exposed from an upper surface of the electrode assembly.

In some examples, the current collector may include a circular planar portion located in contact with the upper surface of the electrode assembly and an extension portion extending upward from an edge of the circular planar portion.

In some examples, the extension portion of the current collector may be interposed between the second gasket and the beading portion.

In some examples, a bending ratio calculated based on the covering length of the crimping portion and the outer diameter of the case may be different from an overlapping ratio calculated based on the cover overlapping length of the crimping portion and the outer diameter of the cap plate.

In some examples, the bending ratio may be greater than the overlapping ratio.

In some examples, the bending ratio may be a percentage of the ratio of the covering length of the crimping portion to the outer diameter of the case. The covering length of the crimping portion may be a length from an end of the first area of the crimping portion located on the upper surface of the cap plate to an outer surface of the case.

In some examples, the bending ratio may be 5% to 8% of the ratio of the covering length of the crimping portion to the outer diameter of the case.

In some examples, the overlapping ratio may be a percentage of the ratio of the cover overlapping length to the outer diameter of the cap plate. The cover overlapping length of the crimping portion may be a length of a portion of the cap plate overlapped by the crimping portion or a length between an end of the crimping portion and an end of the cap plate.

In some examples, the overlapping ratio may be 3% to 6% of the ratio of the cover overlapping length to the outer diameter of the cap plate.

At least some of the above and other features of the invention are set out in the claims.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is a perspective view of an example cylindrical secondary battery according to the present disclosure;
FIG. 2 is a cross-sectional view of the example cylindrical secondary battery of FIG. 1;
FIG. 3 is an enlarged cross-sectional view of area 3 in FIG. 2;
FIG. 4A is a view illustrating a case in which a bending ratio exceeds an upper limit of a reference range;
FIG. 4B is a view illustrating a case in which a support strain exceeds an upper limit of a reference range;
FIGS. 5A and 5B are perspective views of a battery pack according to an embodiment of the present disclosure;
FIGS. 6A is a perspective view of an example vehicle body;
FIGS. 6B is a diagram for explaining a vehicle including the secondary battery pack of FIG. 5.

### DETAILED DESCRIPTION OF THE DRAWINGS

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical aspects and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terms used in this specification are for describing embodiments of the present disclosure and are not intended to limit the disclosure.

In some embodiments of the cylindrical-type battery according to an embodiment of the present disclosure, one of the cylindrical-type batteries is selected, and the selected battery is described as having a general structure, and for commonly applied technologies, describe the general structure of cylindrical-type cells.

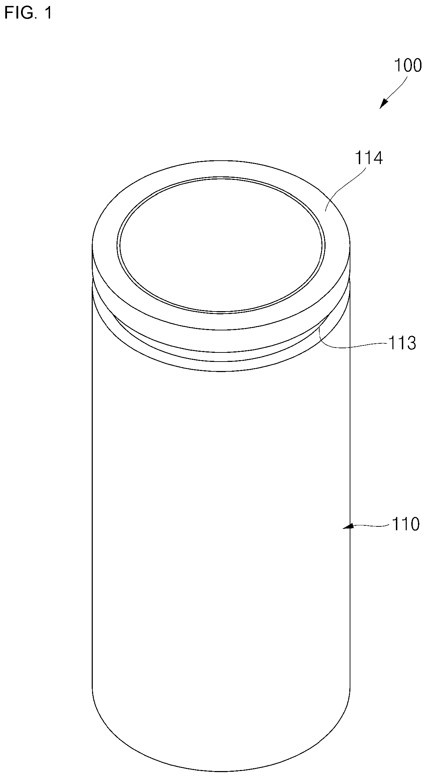

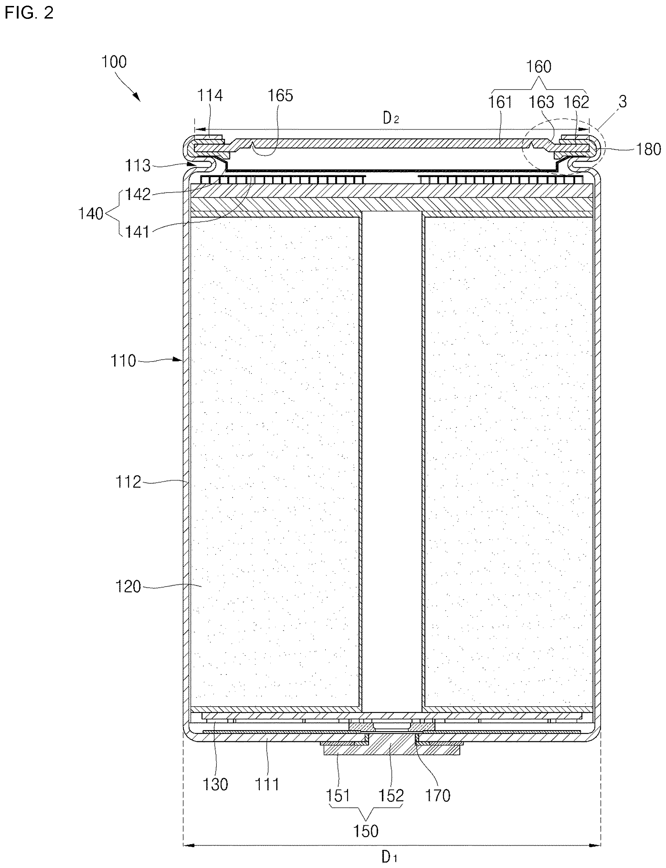

FIGs. 1 and 2 are, respectively, a perspective view and a cross-sectional view of an example cylindrical secondary battery 100 according to the present disclosure. Referring to FIGs. 1 and 2, the example secondary battery 100 according to the present disclosure may include a case 110, an electrode assembly 120, a terminal 150, a cap plate 160, and a gasket 180. In some examples, the secondary battery 100 may further include a first current collector 130, a second current collector 140, and a gasket 170. In some examples, the case 110 may include a beading portion 113 and a crimping portion 114. Hereinafter, the gasket 170 may be referred to as a first gasket, and the gasket 180 may be referred to as a second gasket.

The case 110 may accommodate the electrode assembly 120 and an electrolyte, and may define the external appearance of the secondary battery 100 together with the cap plate 160. The case 110 may include or be referred to as a can, a housing, or an exterior body. The case 110 may include a substantially disc-shaped lower surface portion 111 and a side portion 112 extending upward from the edge of the lower surface portion 111 by a predetermined length. The side portion 112 may be formed to have an open top. The lower surface portion 111 and the side portion 112 of the case 110 may be integrally formed with each other. In some examples, the case 110 may have various shapes other than the circular shape, for example, a pouch shape. The case 110 may include metal, such as steel, nickel-plated steel, a steel alloy, aluminum, an aluminum alloy, and/or deep-drawing cold-rolled steel (SPCE), a laminated film and/or plastic composing a pouch.

In some examples, the case 110 may be provided with a beading portion 113 depressed toward the interior of the case 110 at a position below the cap plate 160 in order to prevent the electrode assembly 120 from escaping outside the case 110. For example, the beading portion 113 may be formed in the side portion 112 of the case 110 so as to be depressed toward the interior of the case 110. The beading portion 113 may also suppress movement of the electrode assembly 120 in the case 110. In some examples, the case 110 may be provided with a crimping portion 114 bent toward the interior of the case 110 at a position above the beading portion 113. For example, the crimping portion 114 may press the peripheral portion of the cap plate 160 via the second gasket 180 to firmly secure the cap plate 160.

The electrode assembly 120 may be accommodated in the case 110 together with an electrolyte. The electrode assembly 120 may include or be referred to as an electrode group, an electrode body, or a jelly roll. The electrode assembly 120 may include a first electrode plate (not shown), a second electrode plate (not shown), and a separator (not shown) disposed between the first electrode plate and the second electrode plate, and may be wound in a cylindrical shape. In some examples, a hollow core (not shown) may be provided at the center of the electrode assembly 120 in the longitudinal direction of the electrode assembly 120. In some examples, a center pin (optional) may be coupled to the core.

The first electrode plate may include a first substrate and a first active material layer located on the first substrate. The first substrate may include a first uncoated portion or a first tab on which the first active material layer is not located, and the first uncoated portion or the first tab may extend outward (e.g., downward). The first tab may be electrically connected to the first current collector 130 (i.e., the terminal 150).

The second electrode plate may include a second substrate and a second active material layer located on the second substrate. The second substrate may include a second uncoated portion or a second tab on which the second active material layer is not located, and the second uncoated portion or the second tab may extend outward (e.g., upward). The second tab may be electrically connected to the second current collector 140 (i.e., the case 110). In some examples, the first tab and the second tab may extend in opposite directions.

The first electrode plate (e.g., the positive electrode plate) may function as a positive electrode. In this case, the first substrate (e.g., the positive electrode substrate) may be formed as, for example, an aluminum foil, and the first active material layer (e.g., the positive electrode active material layer) may include, for example, a transition metal oxide. The second electrode plate (e.g., the negative electrode plate) may function as a negative electrode. In this case, the second substrate (e.g., the negative electrode substrate) may be formed as, for example, a copper foil or a nickel foil, and the second active material layer (e.g., the negative electrode active material layer) may include, for example, graphite and/or silicon.

The separator may prevent a short circuit between the first electrode plate and the second electrode plate while allowing lithium ions to move therebetween. In some examples, the separator may be located on each of two opposite side surfaces of the first electrode plate or may be located on each of two opposite side surfaces of the second electrode plate.

In some examples, as the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}O_{α} (0.90≤a≤1.8, 0≤b≤0.5, 0≤c≤0.5, 0<α<2); LiₐNi_{1-b-c}Mn_{b}X_{c}O_{2-α}O_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a current collector and a positive electrode active material layer formed on the current collector. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The current collector may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0 < x < 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a current collector and a negative electrode active material layer disposed on the current collector. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode current collector, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the positive electrode) and the second electrode plate (e.g., the negative electrode). As the separator, polyethylene, polypropylene, polyvinylidene fluoride, or a multilayer film of two or more layers thereof may be used.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer containing an organic material and a coating layer containing an inorganic material that are laminated on each other.

The first current collector 130 may be connected to the first tab of the electrode assembly 120. The first current collector 130 may include or be referred to as a first current collecting body, a first conductive body, and/or a first conductive plate. In some examples, the first current collector 130 may be formed to be substantially disc shaped. A plurality of first tabs extending/protruding from the electrode assembly 120 may be electrically connected to the upper surface of the first current collector 130. In some examples, the first tab may be compacted or bent in an inward direction approaching the core or in an outward direction away from the core, and may be laser-welded to the upper surface of the first current collector 130. The first current collector 130 may include aluminum, an aluminum alloy, copper, a copper alloy, nickel, and/or a nickel alloy. The first current collector 130 may be fixed and electrically connected to the terminal 150 in such a manner that the lower surface of the first current collector 130 is welded to the upper surface of the terminal 150 in a state of being in contact therewith. The first current collector 130 may act as a passage for flow of current between the first electrode plate of the electrode assembly 120 and the terminal 150.

The second current collector 140 may be connected to the second tab of the electrode assembly 120. The second current collector 140 may include or be referred to as a second current collecting body, a second conductive body, or a second conductive plate. In some examples, the second current collector 140 may be formed to be substantially disc shaped. A plurality of second tabs extending/protruding from the electrode assembly 120 may be electrically connected to the lower surface of the second current collector 140. In some examples, the second tab may be compacted or bent in an inward direction approaching the core or in an outward direction away from the core, and may be laser-welded to the lower surface of the second current collector 140. The second current collector 140 may include copper, a copper alloy, nickel, a nickel alloy, aluminum and/or an aluminum alloy.

In some examples, the second current collector 140 may include a circular planar portion 141 corresponding to the upper surface of the electrode assembly 120 and an extension portion 142 extending upward from the edge of the planar portion 141. The lower surface of the planar portion 141 may be in contact with the upper surface of the electrode assembly 120. The planar portion 141 may be fixed and electrically connected to the second electrode plate exposed above the electrode assembly 120 in such a manner that the lower surface of the planar portion 141 is welded to the upper surface of the electrode assembly 120 in a state of being in contact therewith. The extension portion 142 may extend in the upward direction from the edge of the planar portion 141. The extension portion 142 may be in contact with and coupled to the beading portion 113 of the case 110. In one embodiment, the extension portion 142 may be coupled to the beading portion 113 of the case 110 through welding in a state of being in contact with the inner surface of the beading portion 113. The extension portion 142 may be fitted between the beading portion 113 and the second gasket 180 and thus may be electrically connected to the case 110. In some examples, the extension portion 142 may be provided in plural, and the plurality of extension portions 142 may be spaced apart from each other along the edge of the planar portion 141. The second current collector 140 may be a passage for flow of current between the second electrode plate of the electrode assembly 120 and the case 110. In some examples, the case 110 may be a negative electrode terminal.

The terminal 150 may be inserted into a terminal hole formed in the lower surface portion 111 of the case 110 and may be electrically connected to the first current collector 130. In some examples, the terminal 150 may be a positive electrode terminal. The terminal 150 and the case 110 may have different polarities. The terminal 150 may be made of a material identical or similar to that of the first current collector 130 or the first electrode plate. The diameter of a portion of the terminal 150 exposed below the case 110 and the diameter of a portion of the terminal 150 located in the case 110 may be larger than the diameter of a portion of the terminal 150 located in the terminal hole. The terminal 150 may include a head 151, which is a portion exposed below the case 110, and a fastening portion 152, which is a portion located in the case 110 and opposing the electrode assembly 120. The terminal 150 may be coupled to the terminal hole in the case 110 in a direction from the outside toward the inside of the case 110. In such an embodiment, the head 151 may be located outside the case 110. In some examples, the fastening portion 152 may be compression-deformed (compression-molded) through riveting to be compressed on the upper side of the lower surface portion 111 with the first gasket 170 interposed therebetween. In such an embodiment, the diameter of the fastening portion 152 may gradually increase in a direction from the terminal hole toward the inside of the case 110. In some examples, the head 151 may be in close contact with the lower side of the lower surface portion 111 with the first gasket 170 interposed therebetween. In such an embodiment, the first gasket 170 may be interposed between the terminal 150 and the terminal hole to perform electrical insulation and sealing between the terminal 150 and the case 110. The terminal 150 may be electrically connected to the first electrode plate of the electrode assembly via the first current collector 130.

The first gasket 170 may be interposed between the case 110 and the terminal 150. The first gasket 170 may include or be referred to as an insulating body, an insulating plate, or an insulating film. In some examples, the first gasket 170 may include polypropylene, polyethylene, and/or ethylene propylene diene terpolymer (EPDM), none of which reacts with the electrolyte. Such a first gasket 170 may be coupled between the terminal 150 and the case 110 while having a relatively large area, thereby preventing not only leakage of the electrolyte but also short circuit due to contact between the case 110 and the electrode assembly 120.

The cap plate 160 may be a circular metal plate and may be coupled to the upper end portion of the case 110. The upper surface of the cap plate 160 may be exposed to the outside. The cap plate 160 may be coupled to the upper end portion of the case 110 with the second gasket 180 interposed therebetween, and thus electrical connection between the cap plate 160 and the case 110 may be prevented. The cap plate 160 may be coupled to the case 110 with the second gasket 180 interposed between the beading portion 113 and the crimping portion 114 of the case 110 and the cap plate 160. Because the cap plate 160 is not electrically connected to the positive electrode or the negative electrode of the electrode assembly 120, the cap plate 160 may not have a separate electrical polarity. Thus, in the example secondary battery 100, the terminal 150 may be provided on one surface of the case 110 rather than on the cap plate 160, whereby the negative electrode and the positive electrode may both be provided on one surface of the case 110. In some examples, the cap plate 160 may be made of aluminum, an aluminum alloy, or an equivalent thereto. In other examples, the cap plate 160 may be made of steel, nickel-plated steel, stainless steel, aluminum, and/or an aluminum alloy. In some examples, the case 110 and the cap plate 160 coupled thereto may be collectively referred to as a case. The cap plate 160 may include or be referred to as a vent plate, a cap assembly, a safety vent, a conductive plate, or a sealing plate. In some examples, the cap plate 160 may further include a vent notch 165 formed in the lower surface thereof so as to be relatively thin.

The cap plate 160 may include an edge area 162 interposed between the crimping portion 114 and the beading portion 113 and a central area 161 protruding in the outward direction of the case 110 with respect to the edge area 162. In some examples, in the cap plate 160, the edge area 162 may be located below the central area 161 and thus may be stepped with respect to the central area 161. In some examples, the cap plate 160 may further include a connection area 163 interconnecting the central area 161 and the edge area 162. The connection area 163 may be formed to be slanted. Such a cap plate 160 may be fixed with an end portion of the edge area 162 located between the beading portion 113 and the crimping portion 114 of the case 110. In some examples, the cap plate 160 may be seated on the second gasket 180 in a state in which the second gasket 180 is placed on the beading portion 113 of the case 110. Thereafter, the crimping portion 114 of the case 110 may be bent in the inward direction of the cap plate 160 to press the second gasket 180, thereby coupling the cap plate 160 and the case 110 to each other. Such a second gasket 180 may be pressed between the case 110 and the cap plate 160, thereby achieving sealing therebetween and preventing the cap plate 160 from being separated from the case 110. The cap plate 160 may be disposed on the second gasket 180 in a state in which the second gasket 180 is disposed on the second current collector 140. The second gasket 180 and the upper end of the case 110 may be deformed together to surround the edge of the cap plate 160, whereby the cap plate 160 may be fixed to the case 110. In some examples, the vent notch 165 may be formed in the central area 161. If internal pressure in the secondary battery exceeds a reference pressure, the vent notch 165 may rupture to discharge internal gas. In some examples, the cap plate 160 may function as a current interruption device (CID) that is deformed by internal pressure to interrupt a current path or may function as a fuse that includes a part that melts at high temperature to interrupt a current path.

In some embodiments, the second gasket 180 may be interposed between the case 110 and the cap plate 160 while covering the outer periphery of the cap plate 160. In some embodiments, the outer surface of the second gasket 180 may be in close contact with the beading portion 113 and the crimping portion 114 of the case 110, and the inner surface of the second gasket 180 may be in close contact with the outer periphery of the cap plate 160. In such embodiments, the second gasket 180 may perform sealing and insulation between the case 110 and the cap plate 160. To this end, the second gasket 180 may be assembled to the cap plate 160 and may be assembled to the case 110 to achieve and maintain sealing of the cell. Thus, the sidewall of the case 110 and the cap plate 160 may be sealed and insulated by the second gasket 180. In some examples, the lower end portion of the second gasket 180 may be located between the beading portion 113 and the cap plate 160 to prevent contact therebetween. In some examples, the second gasket 180 may include a sidewall portion located in contact with a side surface of the case 110 and a bottom portion extending inward from a bottom surface of the sidewall portion and comprising at least one opening formed therein. In some examples, the sidewall portion of the second gasket 180 may comprise an upper end area, and the upper end area may be interposed between an outer surface of an end of the cap plate 160 and an inner surface of the crimping portion 114. In some examples, the upper end area of the second gasket 180 may protrude farther toward a center of the cap plate 160 than the crimping portion 114. In another embodiment, a separate upper insulating plate may be omitted, and a gasket integrated with an upper insulating plate may be used to perform sealing between the electrode assembly 120 and the case 110. In such an embodiment, the gasket may function as an upper insulating plate.

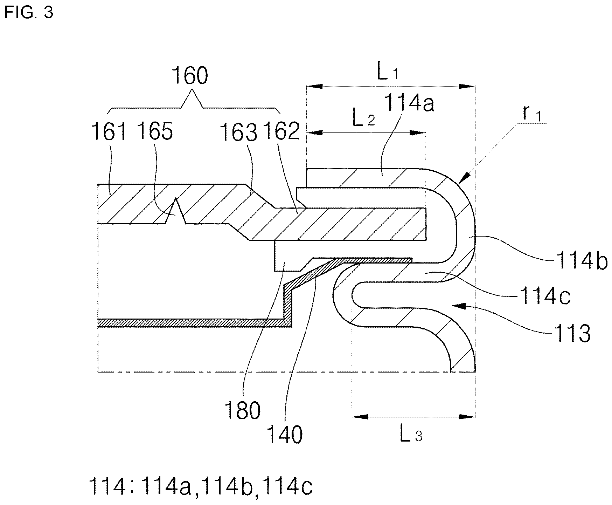

FIG. 3 is an enlarged cross-sectional view of area 3 in FIG. 2. Referring to FIG. 3, the crimping portion 114 may include a first area 114a, which is located at the end of the case 110 and which covers the upper surface of the edge area 162 of the cap plate 160, and a second area 114b, which extends downward from the first area 114a and which is located on the side surface of the cap plate 160. In some examples, the crimping portion 114 may further include a third area 114c, which extends downward from the second area 114b and which is located on the lower surface of the edge area 162 of the cap plate 160. In some examples, the first area 114a, the second area 114b, and the third area 114c may be formed so as to surround the upper surface, the side surface, and the lower surface of the cap plate 160. In some examples, the first area 114a and the second area 114b may be connected to each other via a bent area (or referred to as "a first bent area") formed therebetween, and the second area 114b and the third area 114c may be connected to each other via a bent area (or referred to as "a second bent area") formed therebetween.

In some examples, the upper portion of the case 110 may be bent toward the center of the case 110 through a crimping process and thus may be deformed so as to surround the upper side of the second gasket 180 and the upper periphery of the cap plate 160. In such an embodiment, after being accommodated in the case 110, the cap plate 160 and the second gasket 180 may be in close contact with each other in a state in which the beading portion 113 and the crimping portion 114 are formed.

In some examples, the crimping portion 114 may be formed such that a forming curvature, which is calculated based on a bending amount r₁ of the crimping portion 114 and a covering length L₁ of the crimping portion 114, and/or a support strain, which is calculated based on a depression depth L₃ of the beading portion 113 and a cover overlapping length L₂ of the crimping portion 114, are maintained within predetermined reference numerical value ranges. In some examples, the forming curvature and the support strain may be different from each other. In some examples, the forming curvature may be greater than the support strain. In some examples, the forming curvature (= (L₁/r₁) × 100%) may be a percentage of the ratio of the covering length L₁ of the crimping portion 114 to the bending amount r₁ of the crimping portion 114. In some examples, the bending amount r₁ of the crimping portion 114 may be an arc length of the bent area interconnecting the first area 114a and the second area 114b. In some examples, the covering length L₁ of the crimping portion 114 may be a length from an end (an end closer to the center of the case 110) of the first area 114a of the crimping portion 114 to an outer surface of the case 110. In some examples, the cover overlapping length L₂ of the crimping portion 114 may be a length of the first area 114a of the crimping portion 114 located on the upper surface of the cap plate 160. For example, if the bending amount r₁ is 1.2 and the covering length L₁ is 3.3, the forming curvature may be about 275%. Such a forming curvature may be about 265% to about 300%.

In some examples, the support strain (= (L₂/L₃) × 100%) may be a percentage of the ratio of the cover overlapping length L₂ of the crimping portion 114 to the depression depth L₃ of the beading portion 113. In some examples, the depression depth L₃ of the beading portion 113 may be a length between the outer surface of the second area 114b and the outer surface of the depressed area (the outer surface of the depressed area which is closest to the center of the case 110 or the outer surface where the depressed area is depressed deepest) of the beading portion 113. In some examples, the cover overlapping length L₂ of the crimping portion 114 may be a length of a portion of the cap plate 160 that the crimping portion 114 overlaps or may be a length between an end (an end closer to the center of the case 110) of the crimping portion 114 and an end of the cap plate 160. For example, if the cover overlapping length L₂ is 2.18 and the depression depth L₃ of the beading portion 113 is 3.1, the support strain may be about 70%. Such a support strain may be about 66% to about 75%.

In some examples, the crimping portion 114 may be formed such that a bending ratio, which is calculated based on the covering length L₁ of the crimping portion 114 and the outer diameter D₄ of the case 110 (as referred to in FIG. 2), and/or an overlapping ratio, which is calculated based on the cover overlapping length L₂ of the crimping portion 114 and the outer diameter D₂ of the cap plate 160 (refer to FIG. 2), are maintained within predetermined reference numerical value ranges. In some examples, the bending ratio and the overlapping ratio may be different from each other. In some examples, the bending ratio may be greater than the overlapping ratio. In some examples, the bending ratio (= (L₁/D₁) × 100%) may be a percentage of the ratio of the covering length L₁ of the crimping portion 114 to the outer diameter D₁ of the case 110. For example, if the covering length L₁ is 3.3 and the outer diameter D₁ of the case 110 is 46.0, the bending ratio may be about 7.2%. Such a bending ratio may be about 5% to about 8%. In some examples, the overlapping ratio (= (L₂/D₂) × 100%) may be a percentage of the ratio of the cover overlapping length L₂ to the outer diameter D₂ of the cap plate 160. For example, if the outer diameter D₂ of the cap plate 160 is 43.76 and the cover overlapping length L₂ is 2.18, the overlapping ratio may be about 5.0%. Such an overlapping ratio may be about 3% to about 6%.

In the example secondary battery 100, if the above-described forming curvature, support strain, bending ratio, and/or overlapping ratio fall within the above reference ranges, the sealing performance, external appearance, and plating (rust resistant) quality of the cell housing part may be improved.

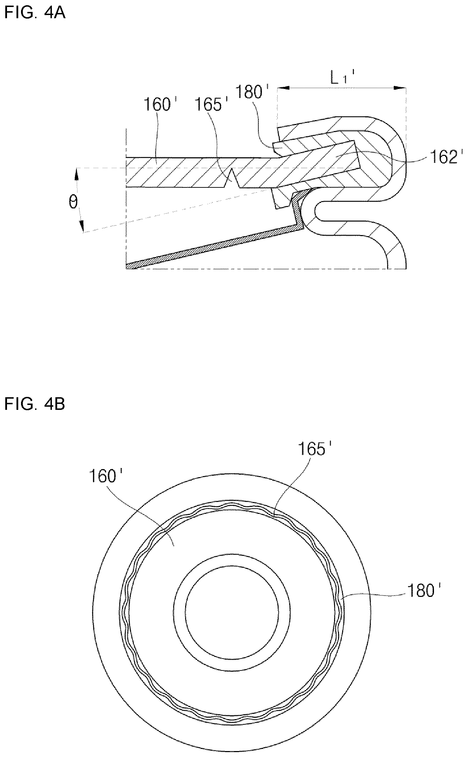

FIG. 4A is a view illustrating a case in which the bending ratio exceeds an upper limit of the reference range. FIG. 4B is a view illustrating a case in which the support strain exceeds an upper limit of the reference range.

Referring to FIG. 4A, if the covering length L₁' increases and thus the bending ratio exceeds an upper limit of the reference range, forming/deformation of the components may proceed excessively. For example, the edge area 162 of the cap plate 160 may be deformed such that the angle θ thereof (i.e., the angle θ between the edge area 162' of the cap plate 160' and the horizontal central area of the cap plate 160') is 16 degrees (°) or greater. Such deformation of the components may cause deterioration in sealing quality and resultant delay of rupture of the vent notch 165'. In some examples, if the covering length L₁' decreases and thus the bending ratio is less than a lower limit of the reference range, load required for forming may increase. For example, load required for forming may increase by about 40% or greater compared to the related art, leading to increase in facility load and damage to a jig. Further, sealing quality may deteriorate. For example, there may occur a problem of the cap plate 160' being separated before rupture thereof.

Referring to FIG. 4B, if the ratio of the cover overlapping length L₂ to the depression depth L₃ is excessively large (i.e., the support strain exceeds an upper limit of the reference range), this may cause undesirable bending of the components and defective appearance. For example, the second gasket 180' may wrinkle. In this case, the cover overlapping length L₂ may be replaced with the covering length L₁. In some examples, if the depression depth L₃ increases (i.e., the support strain is less than a lower limit of the reference range), the thickness of the beading portion 113 may decrease, and the safety of the product may deteriorate. In some examples, if the cover overlapping length L₂ decreases (i.e., the support strain is less than a lower limit of the reference range), sealing quality may deteriorate. For example, there may occur a problem of the vent notch 165' being separated before rupture pressure is reached. In this case, the cover overlapping length L₂ may be replaced with the covering length L₁.

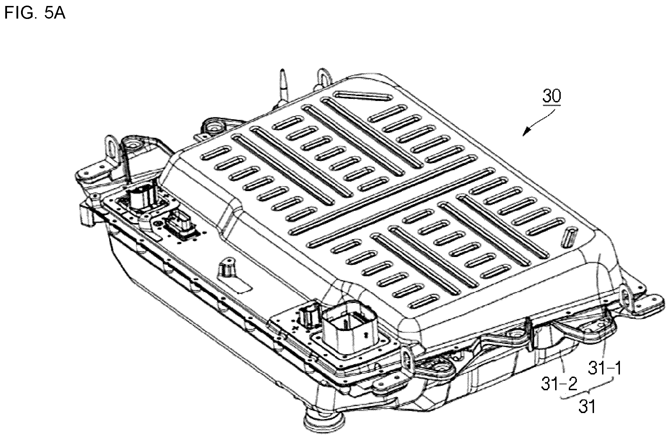

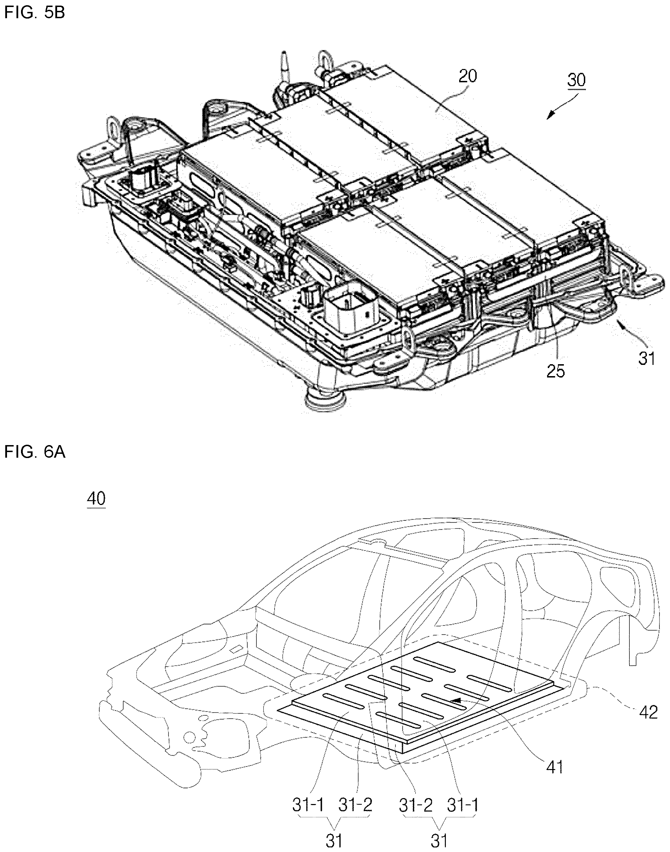

The secondary battery 100 according to the above-described embodiment can be used to manufacture a secondary battery pack 30. FIGS. 5A and 5B are drawings schematically showing the configuration of a secondary battery pack 30 according to an embodiment of the present disclosure.

Referring to FIGS. 5A and 5B, the battery pack 30 may include a plurality of battery modules 20 and a housing 31 for accommodating the plurality of battery modules 20. For example, the housing 31 may include first and second housings 31-1 and 31-2 (or referred to as a battery pack cover and a pack frame, respectively) coupled in opposite directions through the plurality of battery modules 20. The plurality of battery modules 20 may be electrically connected to each other by using a bus bar 25-1, and the plurality of battery modules 20 may be electrically connected to each other in a series/parallel or series-parallel mixed method, thereby obtaining desired (e.g., required) electrical output. In the drawings, for convenience of illustration, components including a bus bar, a cooling unit, external terminals for electrically connecting batteries, etc., are not shown.

The battery pack 30 may be mounted on (or in) a vehicle 50. The vehicle 50 may be, for example, an electric vehicle, a hybrid vehicle, or a plug-in hybrid vehicle. The vehicle 50 may be a four-wheeled vehicle or a two-wheeled vehicle but is not limited thereto.

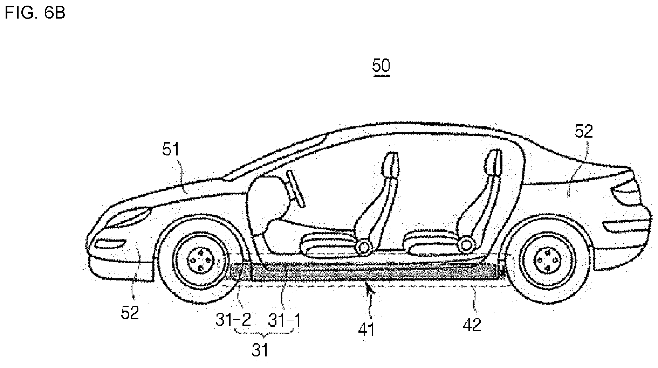

FIGS. 6A is a perspective view of an example vehicle body. FIGS. 6B is a diagram for explaining a vehicle including the secondary battery pack of FIG. 5. In FIG. 6A, the battery pack 30 may include a battery pack cover 31-1, which is a part of a vehicle underbody 41, and a pack frame 31-2 disposed under the vehicle underbody 41. The pack frame 31-2 and the battery pack cover 31-1 may be integrally formed with a vehicle floor 42. The vehicle underbody 41 separates the inside and outside of a vehicle, and the pack frame 31-2 may be disposed outside the vehicle.

Referring to FIG. 6B, the vehicle 50 may be formed by combining additional parts, such as a hood 51 in front of the vehicle and fenders 52 respectively located in the front and rear of the vehicle to a vehicle body 40.

The vehicle 50 may include the battery pack 30 that include the battery pack cover 31-1 and the pack frame 31-2, and the battery pack 30 may be coupled to the vehicle body 40.

According to the present disclosure, a cell housing part including a case and a cap plate may exhibit excellent sealing performance and safety and may improve the external appearance and plating quality thereof through optimal design thereof. Further, because the cell housing part is designed such that a bending ratio, an overlapping ratio, a forming curvature, and a support strain are respectively maintained within predetermined reference numerical value ranges, it may be possible to prevent deterioration in sealing quality due to deformation of components and to prevent damage to a facility due to increase in load required for forming.

However, the aspects and features of the present disclosure are not limited to those described above, and other aspects and features not expressly described herein will be clearly understood by a person skilled in the art from the description of example embodiments of the present disclosure described below.

Although the present disclosure has been described with reference to embodiments and drawings illustrating aspects thereof, the present disclosure is not limited thereto. Various modifications and variations can be made by a person skilled in the art to which the present disclosure belongs within the scope of the present disclosure and the claims and their equivalents, below.

## Claims

1. A secondary battery comprising:
an electrode assembly comprising a first electrode plate, a separator, and a second electrode plate;
a case having a cylindrical shape and configured to accommodate the electrode assembly and electrically connected to the second electrode plate, the case comprising an open upper end portion;
a terminal mounted through a lower surface of the case, the terminal configured to be electrically connected to the first electrode plate and coupled to the case via a first gasket;
a cap plate configured to seal the upper end portion of the case; and
a second gasket interposed between the case and the cap plate to perform sealing and insulation between the case and the cap plate,
wherein the case comprises:
a beading portion depressed toward an interior of the case at a position below the cap plate; and
a crimping portion located above the beading portion and bent toward the interior of the case to fix the cap plate, and
wherein a forming curvature calculated based on a bending amount of the crimping portion and a covering length of the crimping portion is different from a support strain calculated based on a depression depth of the beading portion and a cover overlapping length of the crimping portion.

2. The secondary battery as claimed in claim 1, wherein the forming curvature is greater than the support strain.

3. The secondary battery as claimed in claim 1 or 2, wherein the crimping portion comprises:
a first area located at an end of the case to cover an upper surface of an edge area of the cap plate;
a second area extending downward from the first area and located on a side surface of the cap plate; and
a third area extending downward from the second area and located on a lower surface of the edge area of the cap plate,
wherein the first area, the second area, and the third area are formed so as to surround the upper surface, side surface, and lower surface of the cap plate, respectively, and
wherein the first area and the second area are connected to each other via a first bent area formed therebetween, and the second area and the third area are connected to each other via a second bent area formed therebetween.

4. The secondary battery as claimed in claim 3, wherein the forming curvature is a percentage of a ratio of the covering length of the crimping portion to the bending amount of the crimping portion,
wherein the bending amount of the crimping portion is an arc length of the first bent area interconnecting the first area and the second area, and
wherein the covering length of the crimping portion is a length from an end of the first area to an outer surface of the case,
and wherein optionally the forming curvature is 265% to 300% of the covering length of the crimping portion to the bending amount of the crimping portion.

5. The secondary battery as claimed in claim 3 or 4, wherein the support strain is a percentage of a ratio of the cover overlapping length of the crimping portion to the depression depth of the beading portion,
wherein the depression depth of the beading portion is a length between an outer surface of the second area and an outer surface of a depressed area of the beading portion, and
wherein the cover overlapping length of the crimping portion is a length of a portion of the cap plate overlapped by the crimping portion or a length between an end of the crimping portion and an end of the cap plate,
and wherein optionally the support strain is 66% to 75% of the ratio of the cover overlapping length of the crimping portion to the depression depth of the beading portion.

6. The secondary battery as claimed in any preceding claim, wherein the second gasket is interposed between the cap plate and the crimping portion and between the cap plate and the beading portion to surround an upper surface, a side surface, and a lower surface of an edge area of the cap plate, and
wherein the cap plate has no electrical polarity.

7. The secondary battery as claimed in claim 6, wherein the second gasket comprises:
a sidewall portion located in contact with a side surface of the case; and
a bottom portion extending inward from a bottom surface of the sidewall portion and comprising at least one opening formed therein,
wherein the sidewall portion of the second gasket comprises an upper end area, and
wherein the upper end area is interposed between an outer surface of an end of the cap plate and an inner surface of the crimping portion.

8. The secondary battery as claimed in claim 7, wherein the upper end area of the second gasket protrudes farther toward a center of the cap plate than the crimping portion.

9. The secondary battery as claimed in any preceding claim, wherein the cap plate comprises:
an edge area interposed between the crimping portion and the beading portion; and
a central area protruding in an outward direction of the case with respect to the edge area.

10. The secondary battery as claimed in any preceding claim, wherein the electrode assembly further comprises:
a positive electrode uncoated portion not coated with a positive electrode active material, the positive electrode uncoated portion protruding downward from the first electrode plate; and
a negative electrode uncoated portion not coated with a negative electrode active material, the negative electrode uncoated portion protruding upward from the second electrode plate.

11. The secondary battery as claimed in claim 10, further comprising a current collector formed in a disc shape corresponding to an upper surface of the electrode assembly,
wherein the current collector is in contact with and electrically connected to the second electrode plate exposed from an upper surface of the electrode assembly.

12. The secondary battery as claimed in claim 11, wherein the current collector comprises:
a circular planar portion located in contact with the upper surface of the electrode assembly; and
an extension portion extending upward from an edge of the circular planar portion,
and wherein optionally the extension portion of the current collector is interposed between the second gasket and the beading portion.

13. The secondary battery as claimed in any preceding claim, wherein a bending ratio calculated based on the covering length of the crimping portion and an outer diameter of the case is different from an overlapping ratio calculated based on the cover overlapping length of the crimping portion and an outer diameter of the cap plate.

14. The secondary battery as claimed in claim 13, wherein at least one of:
the crimping portion comprises: a first area located at an end of the case to cover an upper surface of an edge area of the cap plate; a second area extending downward from the first area and located on a side surface of the cap plate; and a third area extending downward from the second area and located on a lower surface of the edge area of the cap plate,
the bending ratio is greater than the overlapping ratio;
the bending ratio is a percentage of a ratio of the covering length of the crimping portion to the outer diameter of the case, wherein the covering length of the crimping portion is a length from an end of the first area of the crimping portion to an outer surface of the case, and wherein optionally the bending ratio is 5% to 8% of the ratio of the covering length of the crimping portion to the outer diameter of the case.

15. The secondary battery as claimed in claim 13 or 14, wherein the overlapping ratio is a percentage of a ratio of the cover overlapping length to the outer diameter of the cap plate, and
wherein the cover overlapping length of the crimping portion is a length of a portion of the cap plate overlapped by the crimping portion or a length between an end of the crimping portion and an end of the cap plate,
and wherein optionally the overlapping ratio is 3% to 6% of the ratio of the cover overlapping length to the outer diameter of the cap plate.
